# EUROPEAN PATENT SPECIFICATION

(11) **EP 4 190 209 B1**
(45) Date of publication and mention of the grant of the patent: **11.03.2026**
(21) Application number: 21000371.1
(22) Date of filing: 22.12.2021
(51) Int. Cl.: A47G 1/02, A47B 67/00, B32B 17/06

(54) **MIRROR FURNITURE FRONT**
SPIEGELMÖBELFRONT
FAÇADE DE MEUBLE À MIROIR

(30) Priority: 06.12.2021 PL 43975421
(43) Date of publication of application: 07.06.2023
(73) Proprietor: Prestige Glass Sp. z.o.o., 82-200 Starogard Gdanski (PL)
(72) Inventor: STOBBA, Adam, 83-207 Kokoszkowy (PL)
(74) Representative: Tarvenkorn, Oliver

(56) References cited:
- EP-A1- 3 300 638
- KR-A- 20180 126 725
- PL-B1- 223 121
- US-B2- 7 435 928

## Description

The object of the invention is a mirror furniture front, with a lighting option, intended for installation in utility furniture, in particular in bathroom cabinets, as well as in other indoor furniture.

A range of solutions related to mirror furniture fronts used in everyday furniture is known.

The European patent publication EP3363334B1 presents a solution disclosing a mirror furniture door with a layered structure. The door includes two mirrors connected together by gluing their rear surfaces coated with a layer of metal and a protective varnish. The mirrors are connected with a connecting EVA film layer. Each of the mirror includes non-transparent and transparent zones, without a protective varnish, and a metal layer. Te non-transparent or transparent zones in both mirrors are connected and overlap such that light may pass through the transparent zones in the connected mirrors.

Another known solution is presented in the European patent application EP2987427. It discloses a solution related to a door or a mirror cabinet, wherein the cabinet includes one door leaf provided as a door panel, connected with at least one mirror and at least one light source providing light on both sides, placed in a through opening cut out in the door leaf. The reflecting surface of the mirror reaches the through opening. The solution provides for variants, in which at least one mirror connected with the door leaf panel includes a through cut-out, matching the through cut-out of the door leaf, where at least one light source is placed, providing light on both sides - inside and outside the cabinet. A variant is provided for, in which an additional light source is provided on the bottom edge of the mirror front of the cabinet.

Another solution known from the Japanese patent publication JP 2011015892 discloses a solution of a furniture front assembled from three doors, wherein each of the doors includes a light-transparent element. The mirror side door includes vertical side strips, while the mirror middle door includes a horizontal strip transparent to light from the inside to the outside. The lighting system radiates light towards the mirror and the light passes outside through the light-transparent strips. The lighting system is installed on the rear surface of the mirror body. The parts of each side door in the form of the mirror, transparent to light, are formed as strips located near the side edges of these side doors. The light-transparent light in the middle part of the front, also in the form of a mirror, as a light-transparent strip, is located in the top part. The lighting system of the front according to this known solution contains a part emitting light towards the mirror surfaces. Light passes through the light-transparent parts in the form of mirror strips without the rear layer, comprising the mirror surface visible on the front side of the mirror.

Another known solution comes from the publication of the utility design no. CN213605225, where a self-lighting bathroom cabinet is disclosed, which includes a cabinet body, with a front in the form of doors used to open or close the cabinet body. Light elements with a power supply unit are installed on the cabinet door as the light source. The power supply unit is installed on the cabinet body and is electrically connected with light elements using a touch unit. The contact unit includes the first contact, provided on the cabinet body and electronically connected with the power supply unit, and the second contact, provided on the cabinet door and electrically connected with the light emitting part. The power supply unit on the cabinet body is connected to the light emitting part on the cabinet door via a contact-type connecting circuit, there is no wired connection between the cabinet body and the cabinet door in this case.

Another known solution is presented in the publication of a Chinese utility model no. CN211582813U, where a bathroom cabinet with a front in the form of a double-sided mirror surface with a lighting functionality is disclosed. The cabinet includes a front in the form of mirrors and an aluminium body, to which the aforementioned door is attached. The cabinet door, between the mirror, is hollow on the inside and affixed using vertical, connecting aluminium profiles. The front of the aluminium profile is affixed to the rear part of the outer lens, and the front of the aluminium profile protrudes outside and is provided with a bevelled, convex edge. The internal part of the aluminium profile is attached on the side surface of the inner lens, and the internal part of the aluminium profile is convex to the inside and attached to the rear part of the inner lens. A LED lighting unit is attached inside the cabinet door. The outer lens has a surface transparent to light from the LED unit. The LED unit is electrically connected with a power supply sources, and a groove appropriate for placement of this LED power supply unit is provided in the top part of the cabinet. The top part of the cabinet is open. An opening appropriate for the passage of the input circuit of the LED power supply unit is provided, the bottom surface of the groove is provided with a second opening, appropriate for the output circuit of the LED power supply unit. In this known solution, the top part of the cabinet is detachably connected to the top cover placed over the groove.

The solution according to the invention publication no. EP 3300638 presents an illuminating mirror with light-emitting diodes, which includes a windshield with a mirror layer on the rear surface and a rear window with a mirror layer and light-emitting diodes between these glasses. This solution focuses on creating doors with light zones essentially in the form of a glass structure with seals at the edges. EP 3 300 638 A1 discloses a mirror furniture front according to the preamble of claim 1.

Thus, a range of solutions is known, in which the mirror furniture front is a door, each leaf of which is made out of two mirrors, glued together with rear surfaces or otherwise connected, such that the front acts as a mirror surface both before opening and after closing of the cabinet. Thus, fronts of this type are particularly used in bathrooms, although they may be installed in other furniture, intended for rooms with different intended uses. Fronts of the type in which mirror door parts do not have a coating on the rear wall of the mirror, comprise transparent parts or are matted, are also known in the field. In the known solutions, removal of parts of the mirror coating on the rear surface of the mirrors is usually achieved by sanding these parts, wherein the remaining part of the rear surface of the mirror or two mirrors glued together at rear surfaces during the subsequent step, is covered in a known manner and protected against the effects of the sanding. These sanded parts of the surface are visible in solutions known in the field as transparent strips. These strips, after sanding and backlit with light, display a uniform, milky halo, with the effect amplified in a range of solutions by gluing a semi-transparent film over these sanded fragments. In solutions known in the field, lighting is installed inside furniture with such doors in order to achieve the effect of a mirror door with parts emitting diffracted light. The lighting systems inside cabinets closed with such fronts are often coupled with contact-type switches controlling switching light sources located inside cabinets on and off. LED-type light sources are usually used in these cases.

The objective of the solution according to the invention is to provide a functional front intended for installation in functional furniture, in particular in bathroom cabinets. The design of the double-sided mirror front containing a lighting system integrated inside and adapted fixtures for hinges solves the previous problem of point lighting, previously executed using additional lighting, usually on the inside of the furniture cabinet.

The mirror furniture front according to the invention is defined in claim 1.

Within the furniture front, a layer of light-reflecting film is preferably located on the contact surface of the diffuser and of the exposed glass part of the inner mirror.

In a preferable variant of the solution according to the invention, the power wires of the strip with LED openings are placed in the apertures of the intermediate panel and guided through openings in the inner mirror, to the power supply source.

The intermediate panel is preferably a 2 mm thick styrofoam panel.

The glue layer preferably includes gluing areas around the edges of the mirrors and in the central part of the furniture front.

The solution according to the invention uses the newest technology integrating lighting sub-units and power supply units within the mirror structure. This helps to solve the problem by creating a user-safe, universal furniture front for use in every day furniture, where a lighting element improving aesthetic and functional qualities of the furniture front is required in addition to the functional aspect characteristic for mirrors. A mirror furniture front with integrated internal lighting was developed, with small thickness and with resistance corresponding to that of designs made of aluminium or mixed with wood. The weight of the front is also decreased, influencing its safety during use and minimising the risk of overloading the cabinet design, in particular around the fixtures and hinges. Power supply elements are provided for in the solution such that the entire lighting unit, including the wiring, is located within the structure of the front and is invisible to the user with the cabinet front both opened and closed.

The mirror furniture front according to the invention is made using precise sanding technology or another method of cast removal, gluing and grinding of connected layers comprising the door leaf, wherein integrated lighting elements and connection elements of the power supply placed within apertures inside the integral intermediate panel are included inside the structure of the front. Viewed from the outside, the front has a layered form including connected mirrors, the intermediate panel and another mirror, which enables a mirror with parts of lit surface to be achieved once suspended of the hinges of the furniture. The need to install the lighting unit inside the cabinet, emitting heat during operation, which may be unfavourable, for example in the case of bathroom cabinets, where cosmetics are store, was avoided

In the solution according to the invention, the entire door is made as a tight monolith with an intermediate layer connecting the entire surface in the form of a plastic layer, where only the strip-like lighting zones are devoid of a mirror coating and intermediate layer and are equipped with a transparent and diffusing layer of plastic foil with a strip of diodes. LED. In this solution, the tightness of the entire door structure increased. Regardless of this, the zone adjacent to the LED strip on the other side is equipped with a strip of aluminum foil that acts as a heat sink and transfers the heat generated by the LED strip to the door layers, which promotes the evaporation of water vapor, which occurs on glass surfaces in bathrooms for which cabinets with doors according to the invention are particularly dedicated.

Thus, a range of solutions is known, in which the mirror furniture front is a door, each leaf of which is made out of two mirrors, glued together with rear surfaces or otherwise connected, such that the front acts as a mirror surface both before opening and after closing of the cabinet. Thus, fronts of this type are particularly used in bathrooms, although they may be installed in other furniture, intended for rooms with different intended uses. Fronts of the type in which mirror door parts do not have a coating on the rear wall of the mirror, comprise transparent parts or are matted, are also known in the field. In the known solutions, removal of parts of the mirror c

The object of the invention has been presented in an embodiment, in the attached figures, in which individual figures of the drawing represent as follows:
- Fig. 1 -: an expanded view of the mirror furniture front.
- Fig. 2 -: a view of the inner side of the front leaf.
- Fig. 3 -: a leaf of the front, viewed along the longer edge.
- Fig. 4 -: a view of the inner side of the front leaf, with an indication of the inner structure.
- Fig. 5 -: an expanded view of the diffuser.
- Fig. 6 -: a view according to Fig. 2, with designations of the gluing zones.
- Fig. 7 -: a view of the light zones within the front leaves.

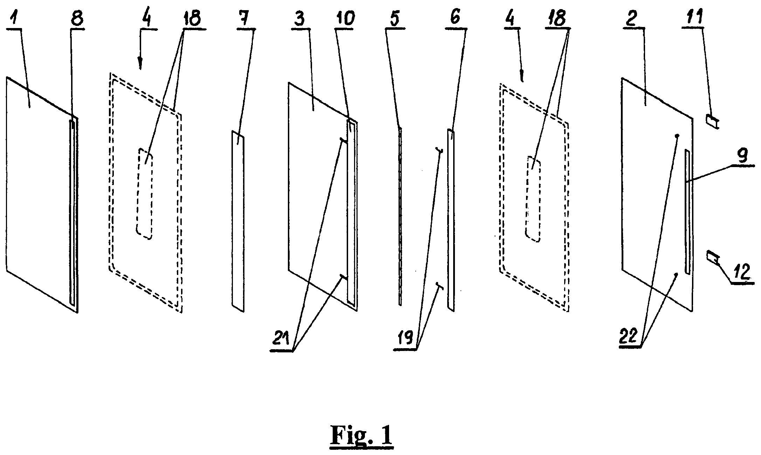

Fig. 1 presents the mirror furniture front in an expanded view, representing individual structural layers. In this embodiment, the furniture front is a door of a hanging bathroom cabinet. This patent disclosure interchangeably uses the designation of the object of the invention as a furniture front and as a cabinet door leaf. The furniture front may be installed as a leaf of a double leaf door, or as a single leaf door in another embodiment, placed on hinges with a vertical or a horizontal axis of rotation. This embodiment of the invention and Fig. 1 to Fig. 7 present the structure of a single leaf of a mirror furniture front according to the invention.

As shown in Fig. 1, the mirror furniture front has a layered structure in the embodiment. The main structural layers include the outer glass mirror 1, 3 mm thick, the inner glass mirror 2, 3 mm thick and a distancing intermediate panel 3 made of plastic. In this embodiment, the intermediate panel 3 is made of 2 mm thick polystyrene.

The outer mirror 1 and the inner mirror 2 are glass mirrors cut to the size of the front leaf, with technological additions intended for the final grinding of all four edges to their final state. Panels 1, 2 are known glass mirror with a functional mirror surface and a sprayed, known reflective layer, as well as known, protective paint on the rear surfaces of the mirrors.

Fig. 1 shows that mirrors 1, 2 have parts of exposed glass in the form of strips 8 near the longer edges, where the known, sprayed reflective layer and the layer of protective paint on the rear surface of the mirror was removed, for example using the known sanding technology, while covering the remaining part of the rear surface of the outer mirror 1 and of the inner mirror 2.

As shown in Fig. 1, an aperture 10 was made in the intermediate panel 3 in order to place the strip 5 with LED diodes and the diffuser 6 inside. Use of a known LED strip, 8 mm wide, with diodes located at the edge of the strip 5 is provided for here. The aperture 10 in the intermediate panel 3 is wider than strips 8, 9 of exposed glass in mirrors 1, 2. The strip 5 with LED diodes and the diffuser 6 presented in Fig. 1 are placed inside the aperture 10. In this embodiment, the aperture 10 has width equal to the sum of the strip 5 with LED diodes and of the diffuser 6 adjacent to the edge of said strip. The diffuser 6 has a dimension at least corresponding to the width of strips 8, 9 of exposed glass in panels 1, 2. LED diodes placed on the edge the longitudinal strip 5 thus touch the longitudinal edge of the diffuser 6.

Fig. 1 also shows that apertures 21 intended for placing the power supply wires 19 of the strip 5 with LED diodes were made in the intermediate panel 3. The same Figure shows that openings 22 for guiding said wires to the assembly panels 11,12 of hinges were prepared in the inner glass mirror 2. Power supply of the strip 5 with LED diodes is provided through both hinges attached to the assembly panels 11,12. The known hinges not shown in the attached figures. Assembly panels 11,12 of the hinges are provided as metal panels glued to the surface of the inner glass mirror 2. The strip 5, width up to 8 mm and thickness up to 2 mm, with LED diodes, requires a 24 volt or a 12 volt power supply, which are safe values approved for such applications. The hinges of the furniture front are connected to a known 24 volt power supply source in this embodiment.

When the strip 5 with LED diodes provides light, much smaller heat amounts are emitted compared to traditional light sources, but LED diodes still increase their temperature. The used strip 5 is provided with 2 mm wide LED diodes along the side edge contacting the diffuser 6, namely with a width which does not exceed the thickness of the intermediate panel 3 in this embodiment. Thus, the amount of emitted heat is small. However, in order to receive and disperse the emitted heat, the strip 5 with LED diodes has been placed in this embodiment on a substrate in the form of a 50 mm wide aluminium strip 7. The aluminium strip 7 is thus a radiator, and its edge overlaps with the edge of strip 5 with LED diodes and does not cover the exposed glass strips 8, 9 of panels 1, 2. The described radiator additionally disperses heat between the glass mirrors 1, 2, facilitating fog removal from foggy mirrors, for example in bathrooms.

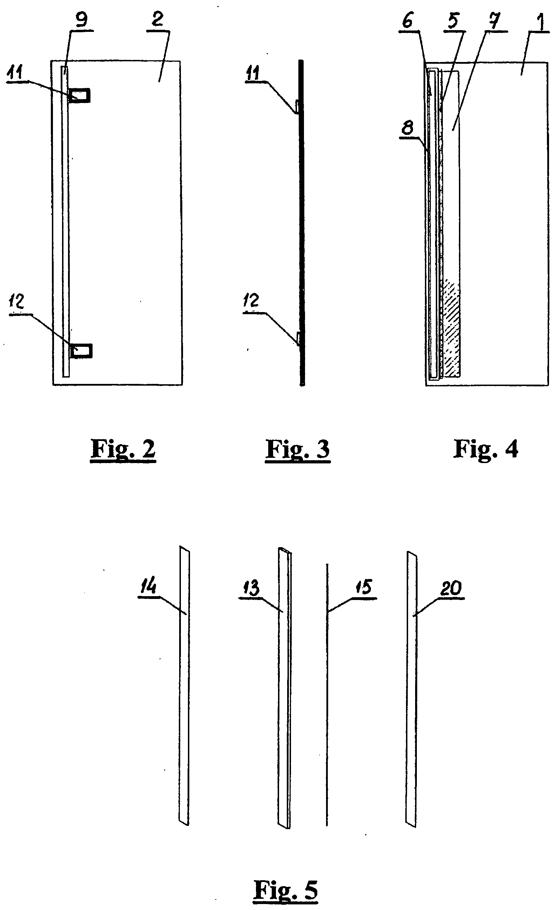

The diffuser 6 is an important element of the solution of the mirror furniture front according to the invention. The diffuser 6 is presented schematically in Fig. 1 and in the expanded view in Fig. 5. The role of the diffuser 6 is to disperse light emitted by the strip 5 with LED diodes, where LED diodes attached to the longitudinal edge of of said strip 5 touch the longitudinal edge of the diffuser 6. The diffuser 6 is provided in this embodiment as a transparent, acrylic strip 13, with its width corresponding to the thickness of the intermediate panel 3 and placed inside the aperture 10 of the intermediate panel 3. The aperture 10 in the intermediate panel 3 thus has its length, width and thickness adapted to the dimensions of the diffuser 6. The expanded view in Fig. 5 shows that the surface of the acrylic strip is covered, on the side facing the outer glass mirror 1, with a strip 14 of known, light dispersing film glued to it. On the side facing the inner glass mirror 2, the surface of the diffuser 6 is covered with a glued strip 20 of a known, light reflecting film. Fig. 5 also shows schematically protection 15 of the outer longitudinal edge of the diffuser 6. This protection is provided in this embodiment as a 2 mm wide strip of light reflecting film. In other embodiments, this edge protection against undesirable light transmission through the free longitudinal edge of the diffuser 6 may be provided otherwise, for example by painting this longitudinal edge over. As it was already said, the other longitudinal edge of the diffuser 6 contacts the edge of the strip 5, on which a series of LED diodes is attached and light enters the diffuser through this edge.

A ready leaf of the mirror front furniture is shown in Fig. 2, viewed from the side on which hinges 11,12 are attached. The same leaf is presented in an edge view in Fig. 3 and from the side of the outer glass mirror 1 in Fig. 4. Fig. 4 also shows the strip 8 of exposed glass of mirror 1, the diffuser 6 visible in this strip and, schematically, strip 5 with LED diodes invisible behind the mirror surface, as well as the radiator in the form of an aluminium film 7, invisible behind the mirror surface.

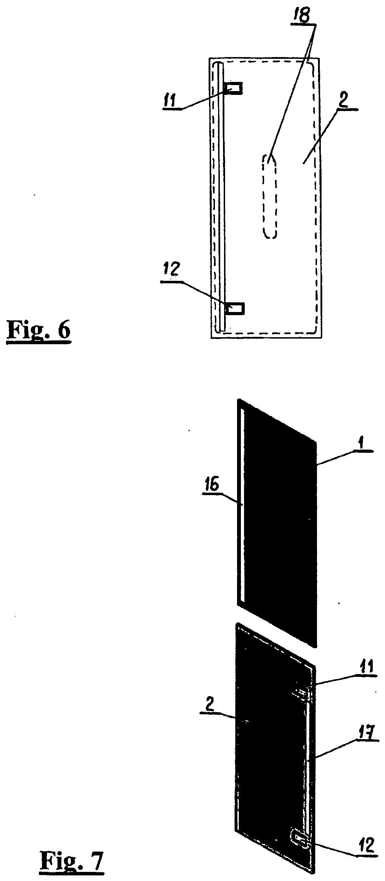

The leaf of the mirror furniture front according to the embodiment includes three main panels glued together:
- outer glass
- intermediate panel 3,
- inner glass mirror 2.
The light generating and dispersing unit described above is attached inside the intermediate panel 3, visible in a ready leaf of the furniture front as lit strips, as shown in Fig. 7. This Figure shows that the lit strip 16 is longer on the side of the outer mirror 1 of the furniture front leaf, while the lit strip 17 is shorter on the side of the inner mirror 2 of the furniture front. In this embodiment, the limited length of the lit strip 17 on the side of the inner glass mirror 2 is caused by the points, at which the assembly panels 11,12 of hinges of the furniture front leaf are glued.

As was already said, the leaf of the mirror furniture front includes glass mirrors 1, 2 and the intermediate panel 3, glued together. After gluing, the leaf of the furniture front has the form of a door with a mirror on one side and a mirror on the other side, wherein lit strips 16, 17 are located in both mirrors, near the edge at which the hinges are installed. Thus, two layers of glue 4 are present between the glass mirrors 1, 2 and the intermediate panel 3. This is shown in Fig. 1. The glue is a known metacrylic glue in this embodiment. In this embodiment, both layers of glue, between the mirror 1 and the panel 3 and between the panel and the inner glass mirror 2, are shaped such that areas 18 around the edge of glass mirrors 1, 2 and of the intermediate panel 3 are glued together, as well as the middle areas between these elements. These gluing areas 18 of glue layers 4 are depicted with dotted lines in Fig. 1 and in Fig. 6. The gluing areas may have different shapes in other embodiments.

Contrary to known solutions, the mirror furniture front according to the invention is a mirror door with lit areas, which use their own light emitted by the design of the door leaf. In solutions known in the field, the effect of lit parts of a mirror door could have been achieved only using light transmission from a light source, usually located inside the cabinet or attached to the door as a separate unit, where mirror fronts included parts missing the mirror coating on the rear surface. Thus, a light source inside the cabinet, often powered through the hinges of the door leaf, was required. In the solution according to the embodiment, the mirror leaf of the furniture front is a light source in itself.

### List of references used in the figures.

1. Outer glass mirror.
2. Inner glass mirror.
3. Intermediate panel.
4. Glue layer
5. Strip with LED diodes
6. Diffuser.
7. Aluminium strip.
8. Part of exposed glass of panel 1.
9. Part of exposed glass of panel 2.
10. Aperture.
11. Assembly panel of a hinge.
12. Assembly panel of a hinge.
13. Transparent acrylic strip.
14. Light dispersing film.
15. Protection of the longitudinal edge of the diffuser.
16. Lit strip of the outer mirror.
17. Lit strip of the inner mirror.
18. Gluing area.
19. Power supply wires.
20. Light reflecting film.
21. Aperture.
22. Opening.

## Claims

1. A mirror furniture front, comprising an outer glass mirror (1) an inner glass mirror (2),
the outer glass mirror and the inner glass mirror having a mirror coating on their respective back face and the outer and the inner glass mirror having parts of exposed glass in the form of strips (8,9) where the mirror coating has been removed,
**characterised in that**
the mirror furniture front further comprises a plastic intermediate panel (3) is placed between the outer glass mirror (1) and the inner glass mirror (2), wherein one layer of glue (4) is present between the outer glass mirror (1) and said intermediate panel (3),
while another layer of glue (4) is present between the inner glass mirror (2) and said
intermediate panel (3), wherein the intermediate panel (3) is provided with an aperture (10) containing a strip (5) with LED diodes and a diffuser (6) placed inside it, where thickness of the strip (5) with LED diodes and of the diffuser (6) is not greater than the thickness of the intermediate panel (3), while thickness of the aperture (10) is at least equal to the combined width of said strip (5) with LED diodes and the width of the diffuser (6), wherein the diffuser is a profile made of transparent plastic with a shape corresponding to the parts of exposed glass in the form of strips (8,9) where the mirror coating has been removed, such that the diffuser (6) is stabilised inside the aperture (10) of the intermediate panel (3) and is placed between these parts of exposed glass in the form of strips (8,9) where the mirror coating has been removed, wherein a layer of light dispersing film (14) is placed on the diffuser (6) on a side facing the outer glass mirror (1).

2. A mirror furniture front according to claim 1, **characterised in that** a layer of light-reflecting film (20) is located on the contact surface of the diffuser (6) and of the exposed part (9) of the inner mirror (2).

3. A mirror furniture front according to claim 1, **characterised in that** power supply wires (19) of the strip (5) with LED diodes are placed inside apertures (21) of the intermediate panel (3) and guided through openings (22) in the inner mirror (2).

4. A mirror furniture front according to claim 1, **characterised in that** the intermediate panel (3) is a 2 mm thick polystyrene panel.

5. A mirror furniture front according to claim 1, **characterised in that** the glue layer (4) includes gluing areas (18) around the edges of mirrors (1,2) and in the central part of the furniture front.

## Patentansprüche

1. Spiegelmöbelfront, umfassend einen äußeren Glasspiegel (1) einen inneren Glasspiegel (2),
wobei der äußere Glasspiegel und der innere Glasspiegel auf ihrer jeweiligen Rückseite eine Spiegelbeschichtung aufweisen und der äußere und der innere Glasspiegel Teile aus freiliegendem Glas in Form von Streifen (8, 9) aufweisen, bei denen die Spiegelbeschichtung entfernt wurde,
**dadurch gekennzeichnet, dass**
die Spiegelmöbelfront ferner eine Kunststoff-Zwischenplatte (3) umfasst, die zwischen dem äußeren Glasspiegel (1) und dem inneren Glasspiegel (2) platziert ist, wobei eine Schicht Klebstoff (4) zwischen dem äußeren Glasspiegel (1) und der Zwischenplatte (3) vorhanden ist, während eine weitere Schicht Klebstoff (4) zwischen dem inneren Glasspiegel (2) und der Zwischenplatte (3) vorhanden ist, wobei die Zwischenplatte (3) mit einer Öffnung (10) versehen ist, die einen Streifen (5) mit LED-Dioden und einen darin angeordneten Diffusor (6) enthält, wobei die Dicke des Streifens (5) mit LED-Dioden und des Diffusors (6) nicht größer als die Dicke der Zwischenplatte (3) ist, während die Dicke der Öffnung (10) mindestens gleich der kombinierten Breite des Streifens (5) mit LED-Dioden und der Breite des Diffusors (6) ist, wobei der Diffusor ein Profil aus transparentem Kunststoff mit einer Form ist, die den Teilen von freiliegendem Glas in der Form von Streifen (8, 9) entspricht, bei denen die Spiegelbeschichtung entfernt wurde, so dass der Diffusor (6) innerhalb der Öffnung (10) der Zwischenplatte (3) stabilisiert ist und zwischen diesen Teilen von freiliegendem Glas in der Form von Streifen (8, 9) platziert wird, bei denen die Spiegelbeschichtung entfernt wurde, wobei eine Schicht aus einer lichtstreuenden Folie (14) auf dem Diffusor (6) auf einer dem äußeren Glasspiegel (1) zugewandten Seite platziert ist.

2. Spiegelmöbelfront nach Anspruch 1, **dadurch gekennzeichnet, dass** sich auf der Kontaktfläche des Diffusors (6) und des freiliegenden Teils (9) des Innenspiegels (2) eine Schicht aus lichtreflektierender Folie (20) befindet.

3. Spiegelmöbelfront nach Anspruch 1, **dadurch gekennzeichnet, dass** Stromzuführungsdrähte (19) des Streifens (5) mit LED-Dioden in Öffnungen (21) der Zwischenplatte (3) platziert und durch Öffnungen (22) im Innenspiegel (2) geführt sind.

4. Spiegelmöbelfront nach Anspruch 1, **dadurch gekennzeichnet, dass** die Zwischenplatte (3) eine 2-mmdicke Polystyrolplatte ist.

5. Spiegelmöbelfront nach Anspruch 1, **dadurch gekennzeichnet, dass** die Klebstoffschicht (4) Klebebereiche (18) um die Ränder der Spiegel (1, 2) herum und im mittleren Teil der Möbelfront aufweist.

## Revendications

1. Façade de meuble à miroir, comprenant un miroir en verre extérieur (1) et un miroir en verre intérieur (2), le miroir en verre extérieur et le miroir en verre intérieur ayant un revêtement miroir sur leur face arrière respective et le miroir en verre extérieur et intérieur ayant des parties de verre exposé sous la forme de bandes (8, 9) desquelles le revêtement miroir a été retiré,
**caractérisée en ce que**
la façade de meuble à miroir comprend en outre un panneau intermédiaire en plastique (3) placé entre le miroir en verre extérieur (1) et le miroir en verre intérieur (2), une couche de colle (4) étant présente entre le miroir en verre extérieur (1) et ledit panneau intermédiaire (3), tandis qu'une autre couche de colle (4) est présente entre le miroir en verre intérieur (2) et ledit panneau intermédiaire (3), le panneau intermédiaire (3) étant pourvu d'une ouverture (10) contenant une barrette (5) à diodes LED et un diffuseur (6) disposé à l'intérieur, l'épaisseur de la barrette (5) à diodes LED et du diffuseur (6) n'étant pas supérieure à l'épaisseur du panneau intermédiaire (3), tandis que l'épaisseur de l'ouverture (10) est au moins égale à la largeur cumulée de ladite barrette (5) à diodes LED et à la largeur du diffuseur (6), le diffuseur étant un profilé en matière plastique transparente de forme correspondant aux parties de verre exposé sous la forme de bandes (8, 9) desquelles le revêtement miroir a été retiré, de sorte que le diffuseur (6) soit stabilisé à l'intérieur de l'ouverture (10) du panneau intermédiaire (3) et soit placé entre ces parties de verre exposé sous la forme de bandes (8, 9) desquelles le revêtement miroir a été retiré, une couche de film dispersant la lumière (14) étant placée sur le diffuseur (6) sur un côté faisant face au miroir en verre extérieur (1).

2. Façade de meuble à miroir selon la revendication 1, **caractérisée en ce qu'**une couche de film réfléchissant la lumière (20) est disposée sur la surface de contact du diffuseur (6) et de la partie exposée (9) du miroir intérieur (2).

3. Façade de meuble à miroir selon la revendication 1, **caractérisée en ce que** des fils d'alimentation en courant (19) de la barrette (5) à diodes LED sont disposés à l'intérieur d'ouvertures (21) du panneau intermédiaire (3) et guidés à travers des ouvertures (22) dans le miroir intérieur (2).

4. Façade de meuble à miroir selon la revendication 1, **caractérisée en ce que** le panneau intermédiaire (3) est un panneau en polystyrène de 2 mm d'épaisseur.

5. Façade de meuble à miroir selon la revendication 1, **caractérisée en ce que** la couche de colle (4) présente des zones de collage (18) autour des bords des miroirs (1, 2) et dans la partie centrale de la façade de meuble.
